# DEMANDE DE BREVET EUROPEEN

(11) **EP 2 314 550 A1**
(43) Date de publication de la demande: **27.04.2011**
(21) Numéro de dépôt: 09174018.3
(22) Date de dépôt: 26.10.2009
(51) Int. Cl.: C03C 3/078, C03C 4/00, C03C 10/00

(54) **Materiau vitrocristallin silico-sodo-calcique**

(71) Demandeur: AGC Glass Europe, 1170 Bruxelles (Watermael-Boitsfort) (BE); UNIVERSITE LIBRE DE BRUXELLES, 1050 Bruxelles (BE)
(72) Inventeur: La désignation de l'inventeur n'a pas encore été déposée
(74) Mandataire: Verbrugge, Vivien François Emeric

(57) **Abrégé**

L'invention concerne un matériau vitrocristallin ayant pour composants principaux SiO₂, Na₂O et CaO et comprenant des particules cristallines de SiO₂ dispersées de façon homogène dans le volume d'une matrice amorphe. Un tel matériau possède une bonne résistance mécanique, en particulier une bonne résistance à la propagation des griffes, et permet une trempe améliorée. Ce matériau présente, de plus, un aspect esthétique plaisant.

## Description

### 1. Domaine de l'invention

Le domaine de l'invention est celui des matériaux vitreux dans le système silico-sodo-calcique. Plus précisément, l'invention concerne un matériau vitrocristallin silico-sodo-calcique qui présente une bonne résistance mécanique, en particulier une bonne résistance à la propagation des griffes, et qui permet une trempe améliorée. Le matériau selon l'invention présente ces propriétés couplées à un aspect esthétique plaisant.

### 2. Description de l'art antérieur

Le verre, dans sa définition la plus large, est un matériau amorphe, exempt d'ordre cristallin et isotrope. Lors de la fabrication d'un tel type de matériau amorphe comportant des constituants d'un composé cristallisable, un phénomène de cristallisation, appelé dévitrification, peut se produire. Dans le cas particulier du verre silico-sodo-calcique, la composition du verre a été optimisée pendant des décennies afin de limiter ce phénomène parasite. En effet, lorsqu'une cristallisation se produit de façon accidentelle ou non contrôlée, elle entraîne la formation de cristaux relativement grossiers, de tailles très diverses et distribués de façon hétérogène dans la matrice vitreuse, souvent sous forme d'aiguilles en surface. La présence de tels cristaux conduit à un défaut optique (diminution de la transparence) et/ou mécanique (diminution de la résistance aux sollicitations mécaniques) du verre résultant.

Néanmoins, l'absence d'interfaces microstructurales des verres inorganiques amorphes mènent à de mauvaises propriétés mécaniques. Cette fragilité mécanique intrinsèque se traduit par des résistances faibles aux chocs mécaniques. En particulier, l'aspect esthétique du verre se trouve souvent fortement détérioré par la formation de griffes ou de rayures lors son utilisation et/ou de son transport. De plus, même si un verre est dur, il est fragile et peu tenace, c'est-à-dire qu'il n'est pas résistant à la propagation de griffes suite à l'absence de discontinuités et de frontières de grains.

Egalement, un verre silico-sodo-calcique, qui est peu conducteur de la chaleur, enregistre une forte dilatation à l'endroit où il est chauffé. Le verre dilaté exerce une poussée sur les parties environnantes ce qui entraîne une rupture de l'objet en verre, c'est la « casse thermique ».

De nos jours, la « trempe » thermique du verre, très utilisée dans l'industrie du verre silico-sodo-calcique, permet l'amélioration de la résistance mécanique et thermique.

Malheureusement, ce traitement thermique, une fois effectué, ne permet pas la découpe ultérieure du produit s'il est sous forme de feuille, par exemple. Dans ce cas, il est important que l'usinage et la mise aux cotes définitives se fassent avant la trempe. Ce dernier point représente un inconvénient majeur pour les produits verriers nécessitant une résistance mécanique accrue, comme les carrelages ou les plans de travail, et qui demandent souvent une découpe pour le placement. De plus, la trempe d'un verre silico-sodo-calcique est délicate voire impossible pour le verre dit « mince », c'est-à-dire un verre sous forme de feuille d'une épaisseur environ inférieure à 2,5 mm. En effet, la contrainte en compression à la surface de l'ordre de 100 MPa induite par la trempe est impossible pour de telles feuilles de verres. Cette limitation provient de la valeur du coefficient d'expansion thermique ou CET du verre silico-sodo-calcique, de l'ordre de 90.10⁻⁷/°C.

Il est pourtant bien connu, dans le monde des matériaux vitreux, que la trempe est facilitée lorsque le CET augmente. Une valeur plus élevée de CET pour le verre silico-sodo-calcique permettrait ainsi une trempe améliorée et donnerait accès des verres minces trempés.

Une voie connue afin d'améliorer la résistance mécanique d'un verre, et en particulier sa résistance à la propagation des griffes, est l'application d'une couche superficielle déposée sur le verre. Cette technique vise à bénéficier de la résistance mécanique spécifique de ladite couche vis-à-vis d'une sollicitation mécanique extérieure. Néanmoins, l'épaisseur de la couche protectrice est limitée et toute griffe macroscopique expose un verre non protégé au milieu extérieur ou mène à la création d'une amorce de fissure dans une zone du verre fragilisée. De plus, le dépôt d'une telle couche améliore uniquement la résistance à la propagation des griffes du verre et ne modifie en rien son coefficient d'expansion thermique.

Dans le domaine des matériaux vitreux, des verres comportant une phase vitreuse amorphe et une phase cristalline sont bien connus de la technique. Ces verres résultent de la dévitrification homogène contrôlée d'un verre. La transformation en céramique semi-cristalline, encore appelée matériau vitrocristallin ou communément vitrocéramique, s'obtient à partir d'un verre par un traitement thermique contrôlé qui permet de produire une grande densité de petits cristaux dispersés de façon homogène dans le volume du matériau. Contrairement à la dévitrification non contrôlée, cette distribution homogène des cristaux permet d'améliorer les propriétés mécaniques du produit. Certaines vitrocéramiques possèdent en effet une grande résistance à la griffe et à la rupture ainsi qu'une absence de dilatation à haute température, ce qui les rend pratiquement invulnérables aux chocs thermiques.

Sur base de ces propriétés, de nombreuses applications se sont développées pour de tels types de verre. La vitrocéramique est, par exemple, utilisée pour la fabrication de taques de cuisson ou de parois de cheminées.

Depuis des décennies et la percée des vitrocéramiques sur le marché dans le milieu des années cinquante, plusieurs compagnies ont développé des vitrocéramiques basées sur la cristallisation partielle d'un verre. Des compositions connues sont basées, par exemple, sur les systèmes Li₂O-SiO₂ (silicates) ou Li₂O-Al₂O₃-SiO₂ (aluminosilicates). Elles présentent en outre souvent un ou plusieurs agents nucléants tels que TiO₂, ZrO₂ ou P₂O₅.

Si beaucoup de matériaux vitrocristallins connus ont des propriétés de résistance mécanique et thermique de loin supérieures au verre silico-sodo-calcique amorphe, ils n'en demeurent pas moins beaucoup plus onéreux à produire et dès lors non transposables à des applications courantes pour des raisons économiques. Grâce à sa facilité de production et au faible prix de revient des matières premières, le verre silico-sodo-calcique garde en effet une place prépondérante dans l'industrie du verre et en particulier pour les marchés du bâtiment, de l'automobile et de la décoration.

Il existe dès lors un intérêt économique évident à produire un matériau silico-sodo-calcique aux propriétés mécaniques accrues, en particulier une bonne résistance à la propagation des griffes, et qui permet une trempe améliorée.

D'autre part, des verres dits « opalins » comportant une phase vitreuse et une phase cristalline sont également bien connus de la technique et sont obtenus en introduisant un opacifiant, classiquement des fluorures, dans un silicate, un aluminosilicate ou un borosilicate, par une cristallisation intentionnelle ou contrôlée de cristaux (dans le cas de l'ajout de fluorures, les cristaux sont classiquement CaF₂ ou NaF). Les verres opalins, très présents dans la vie courante, sont opaques et diffusent la lumière. Ils sont donc principalement utilisés dans des applications de décoration et dans la fabrication de produits de consommation tels que des services de table ou des luminaires. Des verres opalins classiques, commercialisés sous la marque Arcopal®, sont blancs laiteux et sont des fluorosilicates. Néanmoins, l'introduction d'opacifiants classiques tels que des fluorures dans des compositions de verre présente deux inconvénients majeurs: (i) un impact négatif indéniable sur l'environnement et (ii) un phénomène de corrosion des matériaux réfractaires des fours de fusion qui est accentué.

Il y a dès lors également un intérêt à obtenir un matériau silico-sodo-calcique présentant un aspect esthétique plaisant, comparables à celui des verres opalins mais qui est exempt de fluor.

### 3. Objectifs de l'invention

L'invention a notamment pour objectif de pallier aux inconvénients de l'art antérieur en résolvant le problème technique, à savoir obtenir un matériau silico-sodo-calcique, c'est-à-dire appartenant au système Na₂O-CaO-SiO₂, aux propriétés mécaniques accrues, en particulier une bonne résistance à la propagation des griffes, et qui permet également une trempe améliorée.

Un autre objectif de l'invention est de fournir un matériau silico-sodo-calcique possédant, en plus de la résistance mécanique recherchée et du fait qu'il permette une trempe améliorée, le caractère esthétique désiré en fonction de l'application auquel il se destine. L'invention se propose dans ce contexte de fournir un matériau silico-sodo-calcique qui soit transparent ou alternativement, ayant une apparence opaque laiteuse plaisante et comparable à celle des verres opalins mais sans l'ajout d'opacifiant.

Finalement, un objectif de l'invention est de fournir une solution aux désavantages de l'art antérieur qui soit simple, économique et avec un faible impact environnemental.

### 4. Exposé de l'invention

Conformément à un mode de réalisation particulier, l'invention concerne un matériau vitrocristallin ayant pour composants principaux SiO₂, Na₂O et CaO.

Selon l'invention, le matériau vitrocristallin comprend des particules cristallines constituées essentiellement de SiO₂ et dispersées de façon homogène dans le volume d'une matrice amorphe.

Ainsi, le matériau selon l'invention permet de solutionner les inconvénients des matériaux de l'art antérieur et de résoudre le problème technique posé. Les inventeurs ont en effet mis en évidence qu'il était possible, contrairement à l'enseignement de l'état de la technique, d'obtenir un matériau vitrocristallin silico-sodo-calcique. Il est en effet soutenu dans la littérature scientifique, et en particulier dans l'article de Strnad et co. publié dans Physics and Chemistry of Glasses (Vol.14 No.2 April 1973), qu'il est impossible de produire une cristallisation homogène dans le volume d'un verre appartenant à ce système et que seule une cristallisation hétérogène, non contrôlée, peut être obtenue dans ce cas. L'état de la technique ne propose d'ailleurs aucune vitrocéramique dans le système silico-sodo-calcique comportant une phase amorphe et une phase cristalline dispersée de façon homogène dans le volume de ladite phase amorphe. Au contraire, la transparence nécessaire dans les applications communes du verre silico-sodo-calcique (architecture, automobile, etc.) a toujours entraîné l'homme du métier à envisager uniquement des matériaux amorphes et l'a toujours poussé à optimiser la composition du verre ainsi que son procédé de fabrication afin d'éviter ou du moins limiter le phénomène parasite de dévitrification.

De plus, les inventeurs ont mis en évidence, de façon très surprenante, qu'un matériau silico-sodo-calcique de type vitrocristallin permettait d'atteindre des valeurs de CET plus élevées qu'un verre amorphe correspondant.

Le matériau vitrocristallin silico-sodo-calcique selon l'invention possède ainsi une résistance mécanique accrue, en particulier une bonne résistance à la propagation des griffes, et il permet également une trempe améliorée. Le matériau vitrocristallin de l'invention est, de plus, économiquement et esthétiquement acceptable pour des applications courantes dans le bâtiment, l'automobile, la décoration ou la flaconnerie.

Conformément à un mode de réalisation particulier, les particules cristallines dispersées de façon homogène dans le volume d'une matrice amorphe ont une taille comprise entre 5 nm à 500 µm. De préférence, afin d'obtenir un matériau qui soit transparent, les particules cristallines ont une taille comprise entre 5 nm à 500 nm. De préférence, afin d'obtenir un matériau ayant une apparence opaque laiteuse, comparable à celle des verres opalins, les particules cristallines ont une taille comprise entre 500 nm à 500 µm.

L'invention concerne également une feuille constituée du matériau vitrocristallin tel que décrit précédemment ainsi qu'un article comprenant au moins une telle feuille.

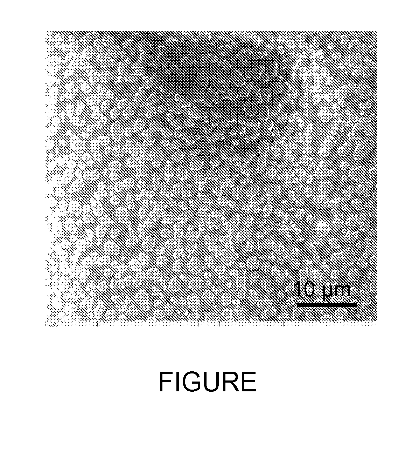

La présente invention sera décrite plus en détails et de manière non-restrictive. La figure annexée représente un cliché obtenu par microscopie électronique d'un matériau conforme à l'invention.

### 5. Description d'au moins un mode de réalisation de l'invention

Le matériau selon l'invention est un matériau vitrocristallin. Par vitrocristallin, on entend un matériau qui présente à la fois une phase vitreuse et une phase cristalline et qui résulte de la dévitrification contrôlée d'un verre.

Le matériau selon l'invention est un matériau silico-sodo-calcique, c'est-à-dire qui appartient au système Na₂O-CaO-SiO_{2.} Le matériau de l'invention a dès lors pour composants principaux SiO₂, Na₂O et CaO. En particulier, le matériau de l'invention comprend, en pourcentage en poids total, 60 à 85 % de SiO₂, 1 à 25 % de Na₂O et 1 à 25 % de CaO. Additionnellement, il peut comprendre d'autres composants en quantités mineures tels que K₂O, MgO, Al₂O₃, BaO, des colorants divers ou des résidus provenant d'additifs modifiant le redox (NaNO₃, Na₂SO₄, coke,...). De préférence, ces composants, s'ils sont présents dans le matériau de l'invention, ne dépasseront pas au total 15 % en poids du matériau.

Selon un mode de réalisation particulier de l'invention, le matériau est exempt de l'élément fluor. Un tel matériau possède dès lors un faible impact environnemental, en particulier comparé à des verres opalins dont l'opacifiant est classiquement à base de fluorures. Le terme « exempt » signifie dans la présente invention que le matériau ne comporte l'élément fluor qu'à l'état de trace. De préférence, le matériau ne comporte l'élément fluor qu'en teneur inférieure à 500 ppm en poids.

Selon un autre mode de réalisation particulier de l'invention, le matériau est également exempt de l'élément lithium. L'oxyde de lithium étant plus onéreux que des oxydes comme Na₂O et CaO, un tel matériau de type silico-sodo-calcique représente dès lors un intérêt économique indéniable, en particulier comparé aux matériaux vitrocéramiques connus de l'état de la technique qui comprennent, le plus souvent, de l'oxyde de lithium. Exempt de l'élément lithium signifie que le matériau de l'invention ne comporte cet élément qu'à l'état de trace. De préférence, le matériau ne comporte l'élément lithium qu'en teneur inférieure à 500 ppm en poids.

Le matériau selon l'invention comprend des particules cristallines dispersées de façon homogène dans le volume d'une matrice amorphe.

Le matériau peut comprendre des particules cristallines sous forme d'un assemblage de plusieurs particules ou sous forme isolée.

Selon l'invention, les particules cristallines ont une taille qui n'est pas inférieure à 5 nm et qui n'est pas supérieure à 500 µm. Par taille, on entend désigner la plus grande dimension des particules.

Selon un mode de réalisation particulier de l'invention, les particules cristallines ont une taille qui n'est pas inférieure à 5 nm et qui n'est pas supérieure à 500 nm. Avantageusement, du fait que la taille des particules est inférieure à la gamme de longueurs d'onde du visible, le matériau vitrocristallin conforme à ce mode de réalisation est transparent, en plus de posséder une résistance mécanique accrue.

Selon un autre mode de réalisation particulier de l'invention, les particules cristallines ont une taille qui n'est pas inférieure à 500 nm et qui n'est pas supérieure à 500 µm. Avantageusement, du fait que la taille des particules tombe dans la gamme de longueurs d'onde du visible, le matériau vitrocristallin conforme à ce mode de réalisation possède, en plus d'une résistance mécanique accrue, une apparence opaque laiteuse plaisante, comparable à celle des verres opalins.

Les particules cristallines selon l'invention sont constituées essentiellement de SiO₂. Des impuretés, telles que des composants provenant de la composition du matériau et se retrouvant essentiellement dans la matrice amorphe, peuvent y être présentes en quantité minime. Si de telles impuretés sont présentes dans les particules cristallines, elles y sont de préférence en une quantité inférieure à 5 % en poids au total. De manière plus préférée, elles y sont en une quantité inférieure à 2 % en poids au total.

Selon un mode de réalisation particulier de l'invention, les particules cristallines sont sous forme d'un seul polymorphe de ce composant. Selon un autre mode de réalisation particulier de l'invention, les particules cristallines sont sous forme de plusieurs polymorphes de SiO₂. Le matériau selon l'invention peut également comprendre des particules selon chacun de ces deux derniers modes de réalisation.

Des exemples de polymorphe de SiO₂ sont le quartz (α ou (β), la cristobalite (α ou (β) ou la tridymite (α ou (β).

Selon un mode de réalisation de l'invention, les particules cristallines de SiO₂ sont essentiellement sous forme de cristobalite.

Le matériau de l'invention comporte des particules cristallines constituées essentiellement de SiO₂ et dispersées de façon homogène dans le volume d'une matrice amorphe. En considérant la composition en poids total du matériau, cette matrice amorphe est dès lors appauvrie en SiO₂ du fait de la présence des particules cristallines.

Le matériau vitrocristallin selon l'invention possède une résistance mécanique accrue, en particulier une bonne résistance à la propagation des griffes, en comparaison avec un verre amorphe correspondant.

La résistance mécanique d'un matériau est souvent exprimée en termes de dureté et de ténacité. La dureté caractérise l'aptitude d'un matériau à être griffé ou rayé (exprimé en MPa ou GPa). La ténacité est la capacité du matériau à résister à la propagation d'une fissure existante. La fragilité (B ou « brittleness ») peut venir compléter ces paramètres et correspond au rapport entre dureté (H) et ténacité (Kc), H/Kc (exprimée en µm^{-O.5}). Dans la présente invention, la dureté et la fragilité sont mesurées par indentation Vickers.

De préférence, le matériau vitrocristallin selon l'invention possède une fragilité inférieure à 6,5 µm^{-O.5}. A titre comparatif, cette valeur est de l'ordre de 7 µm ^{0.5} pour un verre silico-sodo-calcique amorphe, sans traitement particulier.

De plus, le matériau vitrocristallin présente un CET plus élevé qu'un verre amorphe correspondant.

Le réchauffement ou le refroidissement partiel d'un matériau peut, s'il possède une faible conductivité thermique, entraîner des contraintes pouvant provoquer des casses thermiques comme c'est le cas pour le verre silico-sodo-calcique.

L'importance de ce phénomène de dilatation ou contraction d'un matériau respectivement lors du réchauffement ou du refroidissement partiel est classiquement défini par le coefficient d'expansion thermique linéaire. Ce coefficient d'expansion thermique ou CET correspond à l'allongement par unité de longueur pour une variation de 1°C (exprimé en °C ⁻¹).

De préférence, le matériau vitrocristallin selon l'invention présente un CET, mesuré pour une variation de température allant de 25 à 300°C, qui est supérieur 100.10⁻⁷/°C. A titre comparatif, le CET, pour le même domaine de températures d'un verre silico-sodo-calcique amorphe, sans traitement particulier, est de l'ordre de 90.10⁻⁷/°C

Du fait de cette valeur de CET plus élevée, le matériau de l'invention permet une trempe améliorée. On entend par matériau qui permet une trempe améliorée, un matériau qui nécessite, pour obtenir une contrainte en compression à la surface équivalente à celle d'un verre amorphe correspondant, une trempe à une température plus faible et/ou pendant un temps plus court. Dès lors, cet avantage permet un gain d'énergie ce qui entraîne un effet positif supplémentaire de l'invention d'un point de vue environnemental et économique. De même, on entend également par matériau qui permet une trempe améliorée, un matériau qui présente, à traitement thermique équivalent, une contrainte en compression à la surface supérieure à celle d'un verre amorphe correspondant. Finalement, on entend également par matériau qui permet une trempe améliorée, un matériau qui permet la trempe de feuilles « minces » faites de ce matériau.

Le matériau vitrocristallin silico-sodo-calcique selon l'invention peut être obtenu par tout procédé capable de générer des particules cristallines de SiO₂ dans le volume d'une matrice amorphe.

En particulier, le matériau selon l'invention peut être obtenu par deux voies : (i) un traitement thermique contrôlé du matériau à l'état fondu (céramisation), ou (ii) une recuisson contrôlée d'un matériau de même composition globale mais solidifié au préalable à l'état amorphe.

Dans les deux cas, un traitement thermique appelé céramisation est opéré. La céramisation comprend généralement, de manière connue, les étapes suivantes, qui peuvent être répétées plusieurs fois :
a) élévation de la température jusqu'à la température T (palier de céramisation) qui est située au-delà de l'intervalle de nucléation;
b) maintien de la température T pendant un temps t ;
c) refroidissement rapide jusqu'à la température ambiante.

Le matériau selon l'invention peut être utilisé pour fabriquer des articles de formes et de tailles différentes. Il peut, par exemple, être utilisé pour fabriquer des flacons, des globes pour luminaires et des objets de décoration.

En particulier, le matériau vitrocristallin de l'invention peut être utilisé pour fabriquer une feuille dudit matériau. Conformément à ce mode de réalisation, et du fait de sa résistance accrue à la propagation des griffes, il peut, par exemple, être utilisé pour un plan de travail dans une cuisine ou un laboratoire, pour des tables et étagères ou en tant que revêtement de sol (dallage, passerelle). Toujours conformément à ce mode de réalisation, et du fait que le matériau permet également une trempe améliorée, il peut également être utilisé pour fabriquer des panneaux solaires ou des vitrages automobiles.

Un exemple d'article conforme à l'invention comportant plus d'une feuille dudit matériau vitrocristallin est une paroi murale qui est « feuilletée » pour améliorer l'aspect sécurité, c'est-à-dire qui comprend deux feuilles assemblées par un ou plusieurs films d'intercalaire plastique.

D'autres détails et caractéristiques avantageuses ressortiront ci-après de la description des exemples de réalisation d'un matériau selon l'invention, non limitatifs.

### Exemples

Une composition C1 comprend, en pourcentage en poids total, 80.3 % de SiO₂, 10.3 % de Na₂O et 9.4 % de CaO.

Cette composition a été fondue à une température de 1550°C puis coulée dans un moule de 4cmx4cm sur un centimètre de hauteur. Le verre amorphe obtenu par refroidissement progressif de la composition C1 a ensuite été traité thermiquement par chauffage (recuisson) à une température de 1000°C durant 1h, suivi à nouveau d'un refroidissement progressif à température ambiante. Le matériau M1 a été obtenu pour la composition C1.

Le coefficient d'expansion thermique linéaire (CET), la dureté et la fragilité ont été évalués pour le matériau M1. La dureté (H) et la fragilité (B) ont été déterminées par indentation Vickers (charge : 0.5 kg, temps d'application : 25 sec.) tandis que le CET a été obtenu à l'aide d'un dilatomètre pour une gamme de températures allant de 25 à 300°C (norme ISO 7991:1987). Ces techniques ne seront pas davantage exposées car bien connues de l'homme du métier dans le domaine des matériaux vitreux et vitrocristallins.

Ces paramètres ont également été évalués pour un verre amorphe V1 obtenu pour la composition C1 (sans recuisson). Les valeurs obtenues sont les suivantes :

| | **V1** | **M1** |
|---|---|---|
| **CET** ₂₅₋₃₀₀ (10⁻⁷ .°C ⁻¹) | 74 | 120 |
| **Dureté** (GPa) | 4.9 | 4.8 |
| **Brittleness** (µm ^{-0.5}) | 6.4 | 5.3 |

Ces résultats illustrent le fait que le matériau M1 selon l'invention possède une bonne résistance mécanique, en particulier une bonne résistance à la propagation des griffes par rapport à un verre silico-sodo-calcique amorphe correspondant. Ils montrent également un coefficient d'expansion thermique bien plus élevé que celui d'un verre silico-sodo-calcique amorphe.

De plus, le matériau M1 a également été analysé par microscopie électronique à balayage et par diffraction des rayons X. La figure représente un cliché obtenu en microscopie électronique à balayage du matériau M1.

Les analyses ont montré que ce matériau comporte des particules qui sont dispersées de façon homogène dans le volume d'une matrice. Les particules sont cristallines et la matrice est amorphe. Ce matériau est dès lors un matériau vitrocristallin. Les particules cristallines sont des cristaux de SiO₂ sous forme de cristobalite et elles ont une taille qui varie de l'ordre de 0.5 µm à de l'ordre de 5 µm.

Le matériau M1 présente un aspect blanc laiteux et opaque et possèdent dès lors un aspect esthétique comparable à celui de verres opalins au fluor.

## Revendications

1. Matériau vitrocristallin ayant pour composants principaux SiO₂, Na₂O et CaO, **caractérisé en ce que** ledit matériau comprend des particules cristallines constituées essentiellement de SiO₂ et dispersées de façon homogène dans le volume d'une matrice amorphe.

2. Matériau vitrocristallin selon la revendication précédente, **caractérisé en ce qu'**il comprend, en pourcentage en poids total, 60 à 85 % de SiO₂, 1 à 25 % de Na₂O et 1 à 25 % de CaO.

3. Matériau vitrocristallin selon l'une des revendications précédentes, **caractérisé en ce qu'**il est exempt de l'élément fluor.

4. Matériau vitrocristallin selon l'une des revendications précédentes, **caractérisé en ce qu'**il est exempt de l'élément lithium.

5. Matériau vitrocristallin selon l'une des revendications précédentes, **caractérisé en ce que** les particules cristallines ont une taille comprise entre 5 nm à 500 µm.

6. Matériau vitrocristallin selon la revendication précédente, **caractérisé en ce que** les particules cristallines ont une taille comprise entre 5 nm à 500 nm.

7. Matériau vitrocristallin selon la revendication 5, **caractérisé en ce que** les particules cristallines ont une taille comprise entre 500 nm à 500 µm.

8. Matériau vitrocristallin selon l'une des revendications précédentes, **caractérisé en ce que** les particules cristallines sont sous forme d'un ou plusieurs polymorphes de SiO₂.

9. Matériau vitrocristallin selon l'une des revendications précédentes, **caractérisé en ce que** les particules cristallines sont essentiellement sous forme de cristobalite.

10. Matériau vitrocristallin selon l'une des revendications précédentes, **caractérisé en ce qu'**il possède une fragilité, mesurée par indentation Vickers, inférieure à 6,5 µm^{-0.5}.

11. Matériau vitrocristallin selon l'une des revendications précédentes, **caractérisé en ce qu'**il possède un CET, mesuré pour une variation de température allant de 25 à 300°C, qui est supérieur 100.10⁻⁷/°C.

12. Feuille **caractérisée en ce qu'**elle est constituée du matériau vitrocristallin de l'une des revendications 1 à 11.

13. Article **caractérisé en ce qu'**il comprend au moins une feuille selon la revendication précédente.
